# EUROPEAN PATENT APPLICATION

(11) **EP 4 717 387 A1**
(43) Date of publication of application: **01.04.2026**
(21) Application number: 24203561.6
(22) Date of filing: 30.09.2024
(51) Int. Cl.: B23C 5/20, B23C 5/10, B23C 5/22

(54) **A MILLING INSERT AND A MILLING TOOL**

(71) Applicant: AB Sandvik Coromant, 811 81 Sandviken (SE)
(72) Inventor: Roman, Stefan, Sandviken (SE); Eriksson, Thomas, Sandviken (SE); Olofsson, Mats, Sandviken (SE); Nygårds, Emma, Sandviken (SE)
(74) Representative: Sandvik

(57) **Abstract**

The invention relates to a milling insert (100) for mounting in a shoulder milling tool. The milling insert (100) comprises an upper rake surface (103), a bottom surface and a side surface (104). A cutting edge (106) is formed between the side surface (104) and the rake surface (103). The cutting edge (106) comprises a major cutting edge (107a, 107b), a corner radius cutting edge (108a, 108b), a surface wiping cutting edge (109a, 109b) and a ramping cutting edge (110a, 110b). Below the surface wiping cutting edge (109a, 109b), a lower secondary clearance surface has a wiper seating angle η_{w} and an upper primary clearance surface has a wiper overhang angle β_{w}. The wiper overhang angle β_{w} is equal to or larger than 70° and the wiper seating angle η_{w} is equal to or larger than the wiper overhang angle β_{w}. The invention also relates to a milling tool provided with such inserts.

## Description

### TECHNICAL FIELD OF THE INVENTION

The present invention relates to a milling insert intended for shoulder milling according to the preamble of claim 1. The invention also relates to a milling tool according to claim 15.

### BACKGROUND OF THE INVENTION AND PRIOR ART

Milling tools for shoulder milling, such as shank-end milling tools, may advantageously be used for machining of shoulders, grooves and edges. For the machining of pockets and the like, it is preferable to use a milling tool having a ramping cutting edge portion, i.e. a cutting edge portion that is closer to a central axis of the milling tool than a major cutting edge portion used in the machining, and which is formed at an angle with respect to a surface wiping cutting edge portion. For cost-efficiency, it is preferable to use a milling tool which comprises on one hand a tool body, and on the other hand detachable and replaceable milling inserts.

EP3050655A1 discloses a milling insert and a milling tool intended for shoulder milling. The milling insert has a positive basic shape and comprising an upper side comprising a rake surface, a lower side comprising a planar bottom surface, a side surface extending around the periphery of the milling insert, and a cutting edge formed between the side surface and the rake surface. The cutting edge comprises at least a major cutting edge portion, a corner radius cutting edge portion, a ramping cutting edge portion and a surface wiping cutting edge portion. The side surface comprises an upper set of primary clearance surfaces and a lower set of secondary clearance surfaces comprising a plurality of planar secondary clearance surfaces, wherein the upper set of primary clearance surfaces forms an overhang protruding with respect to the secondary clearance surfaces and extending around the entire upper periphery of the milling insert.

Although this document shows a well-functioning insert, there is much room for improvement, e.g. regarding stability and durability as well as cutting performance in certain specific machining operations.

### SUMMARY OF THE INVENTION

The object of the present invention is to provide a milling insert for a shoulder milling tool of the type defined in the introduction, which milling insert is being improved in at least some aspect with respect to such inserts already known, for example through E P3050655A1.

This object is according to the invention obtained by providing such a milling insert by which the wiper seating angle η_{w} is equal to or larger than the wiper overhang angle β_{w}.

The wiper cutting edge portion is a part of an insert of this type that is exposed to large cutting forces, especially under certain cutting operations, such as ramping. At the same time, it is a part where the room for adjustments is somewhat limited, as there is a desire to keep certain parameters, e.g. the angle of the primary clearance surface just below the wiper cutting edge portion (the wiper overhang angle β_{w}), within suitable ranges for the insert to achieve high performance in various specific machining operations. This has resulted in trade-offs between cutting performance and stability/durability at previously known cutting inserts of this type. However, the inventors have discovered that by substantially maintaining the characteristics of the upper part of the insert, particularly the wiper overhang angle β_{w} directly below the wiper cutting edge portion, but increasing the wiper seating angle η_{w} to equal or greater than the wiper overhang angle β_{w}, the cutting performance of the wiper cutting edge portion can be maintained at the same time as the robustness and durability thereof increases significantly.

According to an embodiment of the invention the wiper seating angle η_{w} is larger than the wiper overhang angle β_{w}.

According to another embodiment of the invention the wiper overhang angle β_{w} is 71-75°, preferably 71-73°.

According to another embodiment of the invention the overhang further extends over the corner radius cutting edge portion, wherein below the corner radius cutting edge portion, the secondary clearance surface is formed at a sharp corner seating angle η_{c} with respect to the upper extension plane, the primary clearance surface is formed at a sharp corner overhang angle β_{c} with respect to said upper extension plane, the corner overhang angle β_{c} is equal to or larger than 70°, and the corner seating angle η_{c} is larger than β_{c}-7°, preferably larger than β_{c}-5°.

In the same sense as for the wiper cutting edge portion, by substantially maintaining the characteristics of the upper part of the insert, particularly the corner overhang angle β_{c}, directly below the corner radius cutting edge portion, but increasing the corner seating angle η_{c} to larger than β_{c}-7°, preferably larger than β_{c}-5°, the cutting performance of the corner radius cutting edge portion can be maintained at the same time as the robustness and durability thereof increases significantly. This angular relationship between the clearance surfaces below the corner radius cutting edge portion in combination with the angular relationship between the clearance surfaces under the wiper cutting edge portion results in a milling insert with very good cutting performance, but at the same time with a robustness in the region of the corner provided with the corner radius cutting edge portion, where the insert is exposed to a large amount of stress, meaning increased stability and durability in the corner region and thereby for the insert as a whole. In addition, more material below the cutting edge in the corner region imply a possibility for optimization of the insert in said region, such as by removing material on the top side to optimize chip formation, for cutting operations at low cutting depths.

According to another embodiment of the invention the corner overhang angle β_{c} is equal to or larger than 71°.

According to another embodiment of the invention the overhang extends around the entire upper periphery of the milling insert. By such an overhang, the side surface is divided into an upper part and a lower part, wherein the lower part can be used for supporting the milling insert in the tool body of a milling tool. Thus, both the upper part and the lower part of the milling insert may be optimised for their respective use. The secondary clearance surfaces include a plurality of planar support surfaces (i.e. made flat), providing excellent axial and radial support and stability in the interface between the milling insert and the tool body. The primary clearance surfaces and thereby also the cutting edge, can be designed independently of the flat design of the secondary clearance surfaces. This allows adaptation of the cutting edge for an improved chip cutting result without compromising the stability of the milling insert in the tool body. Furthermore, flank wear can be more easily analysed and such wear of the cutting edge does not affect the support surfaces of the milling insert. Manufacturing of the milling insert, and in particular machining of the cutting edge (e.g. brushing, grinding and blasting), is furthermore facilitated, since machining of the cutting edge can be performed without affecting the planar support surfaces.

According to another embodiment of the invention the secondary clearance surfaces are formed at sharp seating angles β with respect to an upper extension plane parallel with the bottom surface around the entire periphery of the milling insert. Thus, a positive basic shape with a larger upper side than lower side is achieved without having to make the overhang too pronounced.

According to another embodiment of the invention the milling insert has a thickness tₜₒₜ measured between the bottom surface and the cutting edge in a direction perpendicular to the bottom surface, and the lower set of secondary clearance surfaces extends over at least 50% of the thickness tₜₒₜ, preferably over at least 60% of the thickness tₜₒₜ, more preferred over at least 70% of the thickness tₜₒₜ.

According to another embodiment of the invention the secondary clearance surface below the major cutting edge portion comprises a main surface section which forms a largest part of the surface area of this secondary clearance surface and which is formed at a first major cutting edge seating angle ηₘ₁ with respect to the upper extension plane, which first seating angle ηₘ₁ is constant or substantially constant along the major cutting edge portion. In this context, "substantially constant" is to be understood as within engineering tolerance. This gives a relatively large and planar secondary clearance surface which may be used as a support surface for supporting the milling insert in the tool body. The relatively large support surface that can be achieved facilitates machining of the insert seat of the tool body in which the milling insert is to be mounted while ensuring a stable interface between milling insert and tool body.

According to another embodiment of the invention the secondary clearance surface below the major cutting edge portion further comprises a sub-surface section arranged between the main surface section and a transition between the secondary clearance surface and the bottom surface, and extending along the transition from a first end of the transition opposite to a second end thereof adjacent to the secondary clearance surface below the corner radius cutting edge portion, which sub-surface section is formed at a second major cutting edge seating angle ηₘ₂ with respect to the upper extension plane, wherein the second major cutting edge seating angle nₘ₂ is smaller, preferably 5-15° smaller, more preferred 8-12° smaller than the first major cutting edge seating angle ηₘ₁.

The drawback with a secondary clearance surface below the major cutting edge portion coherent in one single plane, as shown at the insert in the prior art document mentioned, is that with the desired positioning of the milling insert in an insert seat of a tool body, the bottom support interface between insert and insert seat will be smaller than desirable as the largest dimension possible for the bottom surface of the insert is restricted to guarantee clearance towards the milled surface on a workpiece.

The main purpose with the design according to the invention is to achieve a robust and strong interface between the insert and the insert seat in the milling tool, while maintaining the desired functionality. The design of the secondary clearance surface below the major cutting edge portion in the form of a main surface section with one seating angle and a sub-surface section with another, smaller, seating angle enables a larger bottom surface of the insert thereby a larger and more stable bottom support interface between the insert and insert seat while still maintaining sufficient clearance during a machining operation. At the same time, the essentially flat surface sections of this secondary clearance surface imply an uncomplicated and cost-efficient production of the milling insert.

According to another embodiment of the invention, in a side view, straight towards the secondary clearance surface below the major cutting edge portion, the sub-surface section has a triangular shape with one leg extending from said first end of the transition along the transition towards the second end thereof over 45-55% of the total width of the transition, measured between the first and second ends thereof, and another leg extending from the first end of the transition up towards a rear end of the major cutting edge portion opposite to a front end thereof adjacent to the corner radius cutting edge portion, over 45-55% of a thickness tₜₒₜ of the milling insert measured between the bottom surface and the cutting edge in a direction perpendicular to the bottom surface. The design and position of such a triangular shaped secondary clearance sub-surface section is especially suitable to match the clearance requirements close to max depth of cut.

According to another embodiment of the invention the primary clearance surface below the ramping cutting edge portion is formed at a sharp overhang angle βᵣ with respect to an upper extension plane parallel with the bottom surface, the secondary clearance surface below the ramping cutting edge portion is formed at a sharp seating angle ηᵣ with respect to said upper extension plane, wherein the ramping seating angle ηᵣ is larger, preferably 5-15° larger, even more preferred 8-12° larger, than the ramping overhang angle βᵣ. This results in sufficient primary clearance behind the ramping cutting edge portion also at relatively large radial tipping-in angles without compromising the stability of the milling insert in the tool body, in particular when the secondary clearance surface below the ramping cutting edge portion is used as a support surface.

According to another embodiment of the invention the milling insert is indexable with two index positions. The milling insert thus has a two-folded rotational symmetry with two major cutting edge portions, two surface wiping cutting edge portions, two ramping cutting edge portions, etc. Depending on index position, only one of the major cutting edge portions is active at a time. This prolongs the tool life of the milling insert.

According to another embodiment of the invention, in a top view straight towards the rake surface, the outer periphery of the milling insert is formed by, in a clockwise direction and in the following order, a first major cutting edge portion extending along the first long side surface section, a first corner radius cutting edge portion extending over a transition between the first long side surface section and the first short side surface section, a first surface wiping cutting edge portion extending along the first short side surface section and forming an essentially right angle with the first major cutting edge portion, a first transition portion extending along the first short side surface section, a first ramping cutting edge portion extending along the first short side surface section and forming an angle of 10-30° with the first surface wiping cutting edge portion, a first transition corner portion extending over a transition between the first short side surface section and a second long side surface section, a second major cutting edge portion extending along the second long side surface section, a second corner radius cutting edge portion extending over a transition between the second long side surface section and a second short side surface section, a second surface wiping cutting edge portion extending along the second short side surface section and forming an essentially right angle with the second major cutting edge portion, a second transition portion extending along the second short side surface section, a second ramping cutting edge portion extending along the second short side surface section and forming an angle of 10-30° with the second surface wiping cutting edge portion and a second transition corner portion extending over a transition between the second short side surface section and the first long side surface section.

According to an embodiment of the invention, the cutting edge extends in parallel or essentially in parallel with the bottom surface. "Essentially parallel" is here intended to mean within engineering tolerance. The parallel or essentially parallel design provides improved chip control since it creates more space for the chip on the rake surface of a relatively small diameter milling tool. It also provides improved chip formation since it enables creation of a larger and smoother rake surface than in the case with a non-parallel design of the cutting edge, since the rake surface on the upper surface can be formed at the same distance or level from the cutting edge around the entire milling insert, whereby for instance a tendency of over breaking the chips at larger cutting depths can be avoided. The parallel design furthermore simplifies manufacturing of the milling insert using a pressing process, and it also facilitates brushing, grinding and/or blasting of the cutting edge.

According to another embodiment of the invention, the rake surface comprises a planar central region extending in parallel with or essentially in parallel with the bottom surface. "Essentially parallel" is here intended to mean within engineering tolerance. This is particularly suitable for a milling insert with the cutting edge formed in parallel with the bottom surface, wherein the planar central region of the rake surface is recessed with respect to the cutting edge. The planar central region promotes chip formation/control and also contributes to a simplified production process.

According to another embodiment of the invention, the overhang has a thickness tₒₕ within the range 0.25 mm ≤ tₒₕ ≤ 0.55 mm in a direction perpendicular to the bottom surface, preferably within the range 0.30 mm ≤ tₒₕ ≤ 0.50 mm, more preferably within the range 0.35 mm ≤ tₒₕ ≤ 0.45 mm. This is primarily intended to allow an acceptable amount of flank wear on the cutting edge without affecting the secondary clearance surfaces. This will also facilitate detection of an acceptable amount of flank wear (e.g. in a range of 0.2-0.3 mm) in that the overhang exhibits said flank wear over the entire or substantially the entire thickness, indicating that a change of index position or a change of the entire insert is necessary.

According to another embodiment of the invention, when the milling insert is mounted in a tool body, at least one of the planar support surfaces is configured to form an axial support surface and at least another one of the planar support surfaces is configured to form a radial support surface, the radial support surface and the axial support surface forming a sharp angle of 65-75°, preferably 68-72°, with each other as seen in a plane parallel with the bottom surface. The planar support surface used as a radial support surface is preferably the surface below the inactive major cutting edge portion, in the case of an indexable milling insert. The planar support surface used as an axial support surface is in this case preferably the surface below the inactive ramping cutting edge portion.

According to another embodiment of the invention, the primary clearance surface below the major cutting edge is formed at an overhang angle βₘ with respect to an upper extension plane parallel with the bottom surface, which overhang angle βₘ decreases from the corner radius cutting edge portion and along the major cutting edge portion, so that an effective clearance angle along the major cutting edge portion is constant or substantially constant when the milling insert is mounted at a positive axial tipping-in angle in a tool body. This ensures sufficient clearance also at large cutting depths.

According to another embodiment of the invention, the cutting edge comprises an additional cutting edge portion positioned on a transition portion between, and forming an angle with, the surface wiping cutting edge portion and the ramping cutting edge portion. This is preferable for small corner radii to preserve the position of the ramping cutting edge portion and shorten the length of the surface wiping cutting edge. Preferably, the additional cutting edge portion is formed at an angle of 2°-4° with respect to the surface wiping cutting edge portion. In other words, the additional cutting edge clears from the workpiece and the surface wiping cutting edge is not made too long so that axial cutting forces generated by the same will exceed acceptable levels and thereby cause detrimental vibrations in the tool during milling.

The present invention also relates to a milling tool comprising a milling insert according to any of the above-mentioned embodiments, detachably mounted in a tool body of the milling tool. Advantages and advantageous features of such a milling tool is clear from the above and following discussion of a milling insert according to the invention.

### BRIEF DESCRIPTION OF THE DRAWINGS

Hereinafter follows a detailed description of an embodiment of the invention cited as an example, with reference to the appended drawings.

### In the drawings:

- Fig. 1: is a perspective view obliquely from above of a milling insert according to an embodiment of the invention,
- Fig. 2: is a perspective view obliquely from below of the milling insert in Fig. 1,
- Fig. 3: is a top view of the milling insert in Fig. 1,
- Fig. 4: is a side view of a short side of the milling insert in Fig. 1,
- Fig. 5: is a side view of a long side of the milling insert in Fig. 1,
- Fig. 6: is a bottom view of the milling insert in Fig. 1,
- Fig. 7: is a cross-sectional view of the milling insert along the line VII-VII in Fig. 3,
- Fig. 8: is a perspective view of a milling tool according to an embodiment of the invention,
- Fig. 9: is a cross-sectional view of a part of the milling insert along the line IX-IX in Fig. 3, and
- Fig. 10: is a cross-sectional view of a part of the milling insert along the line X-X in fig. 3.

### DETAILED DESCRIPTION OF AN EMBODIMENT OF THE INVENTION

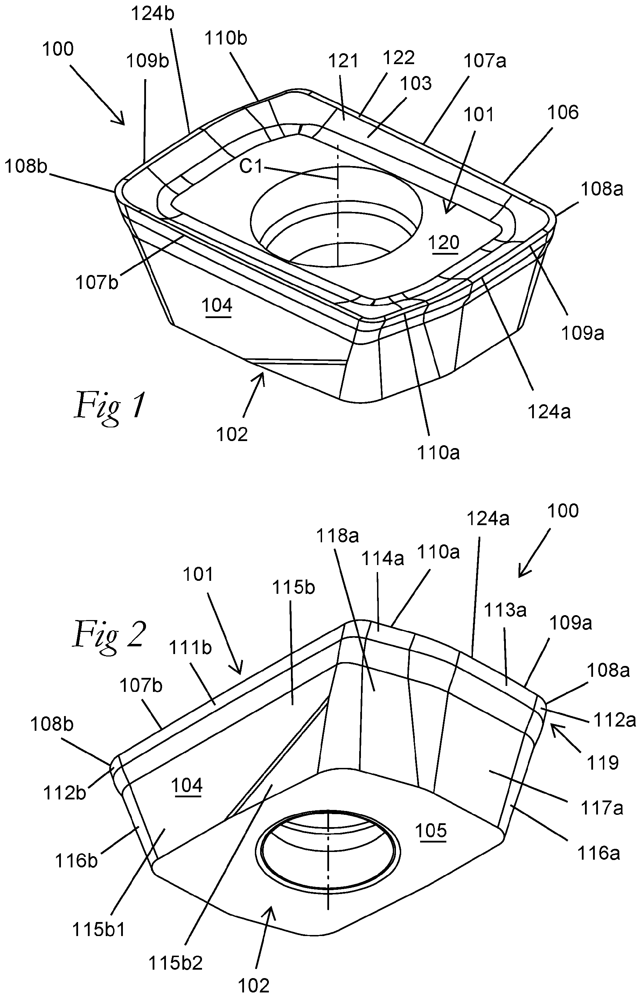

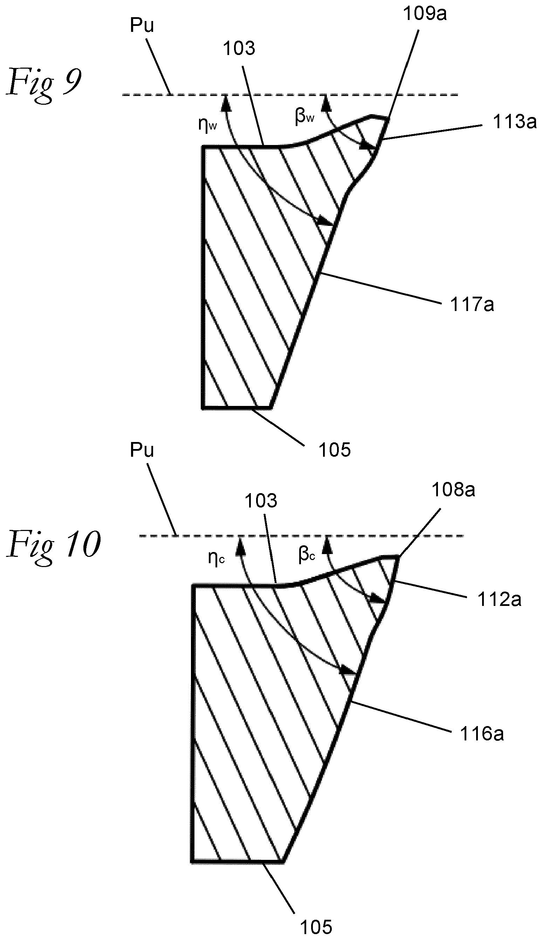

Fig. 1-7 and 9-10 show different views of a milling insert 100 intended for shoulder milling, i.e. milling at an entering angle of 90° according to an embodiment of the invention. The milling insert 100 is indexable with two index positions and has a positive basic shape. It comprises an upper side 101 and a lower side 102 opposite the upper side 101. A central axis C1 extends between the upper side 101 and the lower side 102. A central hole is provided for mounting the milling insert in a tool body. The upper side 101 comprises a rake surface 103 having a planar central region 120 extending around the central hole. The lower side 102 comprises a planar bottom surface 105.

Around the periphery of the milling insert, a side surface 104 extends. The side surface 104 comprises opposite first 104L1 and second 104L2 long side surface sections, and opposite first 104S1 and second 104S2 short side surface sections, wherein the long side surface sections each has a greater length than each of the short side surface sections. A cutting edge 106 is formed between the rake surface 103 and the side surface 104. An upper extension plane Pu is defined, extending in parallel with the bottom surface 105 above the cutting edge 106. The cutting edge 106 extends in parallel, or essentially in parallel, with the upper extension plane Pu. The planar central region 120 of the rake surface 103 is recessed with respect to the cutting edge 106, wherein an inclined surface 121 of the rake surface 103 extends from the planar central region 120 toward the cutting edge 106. A reinforcement land 122 is formed between the inclined surface 121 and the cutting edge 106.

Since the milling insert 100 has two index positions, the cutting edge 106 comprises two major cutting edge portions 107a, 107b formed to be active one at a time. The cutting edge 106 further comprises two corner radius cutting edge portions 108a, 108b, two surface wiping cutting edge portions 109a, 109b, and two ramping cutting edge portions 110a, 110b. Each surface wiping cutting edge portion 109a, 109b is positioned between its associated corner radius cutting edge portion 108a, 108b and its associated ramping cutting edge portion 110a, 110b and forms a right angle or an essentially right angle with its associated major cutting edge portion 107a, 107b. The angle between the surface wiping cutting edge 109a, 109b and the major cutting edge portion 107a, 107b is designed to generate a 90° shoulder in the workpiece during a milling operation. However, this angle may vary depending on the radial and the axial tipping-in angle on the mounted insert 100 in the insert seat of the tool body. In this specific embodiment the surface wiping cutting edge portions 109a, 109b form a 91° angle with the major cutting edge portions 107a, 107b due to its intended mounting at a negative radial and positive axial tipping-in angle in order to generate the 90° shoulder in the workpiece. Each ramping cutting edge portion 110a, 110b is formed at sharp angle with respect to the associated major cutting edge portion 107a, 107b to allow ramping of a workpiece. In the shown embodiment, the ramping cutting edge portion 110a, 110b is formed at an angle of approximately 72° with respect to the major cutting edge portion 107a, 107b.

The ramping cutting edge portions 110a, 110b each comprises a straight part, as seen in a top view, of at least 0.8 mm, preferably at least 1 mm and in the example shown about 1.27 mm.

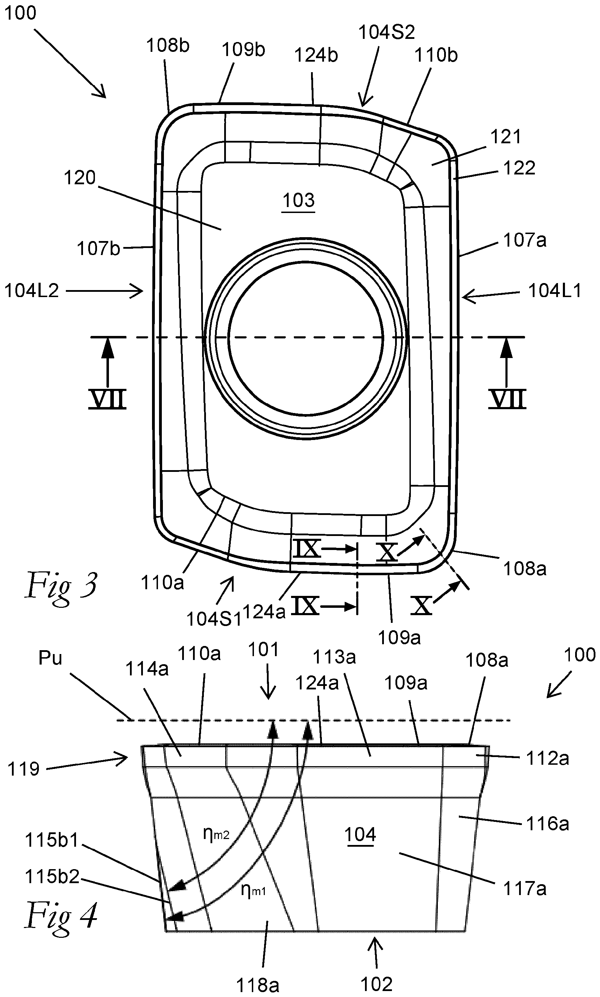

Accordingly, in a top view straight towards the rake surface 103 (see Fig. 3), the outer periphery of the milling insert 100 is formed by, in a clockwise direction and in the following order, a first major cutting edge portion 107a extending along the first long side surface section 104L1, a first corner radius cutting edge portion 108a extending over a transition between the first long side surface section 104L1 and the first short side surface section 104S1, a first surface wiping cutting edge portion 109a extending along the first short side surface section 104S1, and forming an essentially right angle, such as 87-93°, with the first major cutting edge portion 107a, a first transition portion, including the additional cutting edge 124a, extending along the first short side surface section 104S1, and interconnecting the first surface wiping cutting edge portion 109a and a first ramping cutting edge portion 110a, the first ramping cutting edge portion 110a extending along the first short side surface section 104S1 and forming an angle of 10-30° with the first surface wiping cutting edge portion 109a, a first transition corner portion extending over a transition between the first short side surface section 104S1 and the second long side surface section 104L2, a second major cutting edge portion 107b extending along the second long side surface section 104L2 opposite to the first long side surface section 104L1, a second corner radius cutting edge portion 108b extending over a transition between the second long side surface section 104L2 and the second short side surface section 104S2, a second surface wiping cutting edge portion 109b extending along the second short side surface section 104S2 opposite to the first short side surface section 104S1, and forming an essentially right angle, such as 87-93°, with the second major cutting edge portion 107b, a second transition portion, including the additional cutting edge 124b, extending along the second short side surface section 104S2 and interconnecting the second surface wiping cutting edge portion 109b and a second ramping cutting edge portion 110b, the second ramping cutting edge portion 110b extending along the second short side surface section 104S2 and forming an angle of 10-30° with the second surface wiping cutting edge portion 109b and finally a second transition corner portion extending over a transition between the second short side surface section 104S2 and the first long side surface section 104L1 connecting back to the first major cutting edge portion 107a.

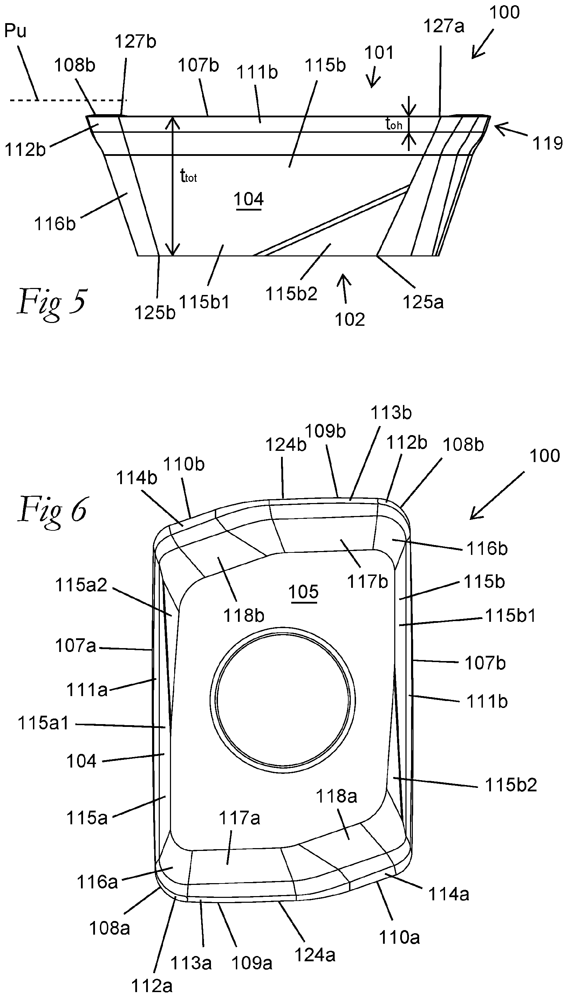

Below each of the cutting edge portions 107a-110b, the side surface 104 comprises an upper set of primary clearance surfaces 111a, 111b, 112a, 112b, 113a, 113b, 114a, 114b, formed immediately below the cutting edge 106, and a lower set of secondary clearance surfaces 115a, 115b, 116a, 116b, 117a, 117b, 118a, 118b, formed below the primary clearance surfaces 111a-114b as shown in Fig. 6. Each of the secondary clearance surfaces 115a-118b is associated with a primary clearance surface 111a-114b below which it extends. The secondary clearance surfaces 115a, 115b located below the major cutting edge portions 107a, 107b form radial support surfaces for supporting the milling insert 100 in the insert seat of a tool body, wherein the secondary clearance surface 115b below the inactive major cutting edge portion 107b forms the radial support surface when the major cutting edge portion 107a is active and vice versa. The secondary clearance surfaces 118a, 118b located below the ramping cutting edge portions 110a, 110b, respectively, form axial support surfaces, wherein the secondary clearance surface 118b is an active support surface when the major cutting edge portion 107a is active and vice versa. The secondary clearance surfaces 115a, 115b, 118a, 118b formed as support surfaces are planar surfaces. Each of the secondary clearance surfaces is formed at a sharp seating angle η with respect to the upper extension plane Pu. The seating angle η varies around the milling insert.

The primary clearance surfaces 111a, 111b, 112a, 112b, 113a, 113b, 114a, 114b form an overhang 119 extending around the entire upper periphery of the milling insert 100 just below the cutting edge 106. The overhang 119 protrudes with respect to the lower part of the milling insert 100. Each of the primary clearance surfaces 111a-114b is formed at a sharp overhang angle β with respect to the upper extension plane Pu. The overhang angle β varies around the milling insert.

As shown in Fig. 5, the milling insert 100 has a thickness tₜₒₜ measured between the bottom surface 105 and the cutting edge 106 in a direction perpendicular to the bottom surface 105. Here, the thickness tₜₒₜ is approximately 3.7 mm, but tₜₒₜ may be up to 6 mm for larger milling inserts according to the invention. The lower set of secondary clearance surfaces 115a-118b extends over at least 50 % of the thickness tₜₒₜ, preferably over at least 60 % of the thickness tₜₒₜ, more preferably over at least 70 % of the thickness tₜₒₜ. For large milling inserts, with a larger thickness tₜₒₜ, the lower set of clearance surfaces may extend over more than 85 % of the total thickness tₜₒₜ. The overhang has a thickness tₒₕ which is here 0.40 mm and which should be within the range 0.25 mm ≤ tₒₕ ≤ 0.55 mm, preferably within the range 0.30 mm ≤ tₒₕ ≤ 0.50 mm, and more preferably within the range 0.35 mm ≤ tₒₕ ≤ 0.45 mm. The thickness tₒₕ of the overhang 119 is chosen to allow an acceptable amount of wear on the cutting edge 106 and is therefore independent of the total thickness tₜₒₜ of the milling insert 100. The lower set of secondary clearance surfaces 115a-118b in the shown embodiment extends over approximately 75 % of the thickness tₜₒₜ of the milling insert 100.

Below the ramping cutting edge portion 110a, 110b, the ramping seating angle ηᵣ is larger, preferably 5-15° larger, even more preferred 8-12° larger, than the ramping overhang angle βᵣ. In the shown embodiment, the overhang angle βᵣ along the ramping cutting edge portion 110a, 110b, is approximately 60°. The seating angle ηᵣ is approximately 70°.

Below the surface wiping cutting edge portion 109a, 109b, the wiper seating angle η_{w} is equal to or, and preferably, larger than the wiper overhang angle β_{w}. The wiper overhang angle β_{w} is equal to or larger than 70°, preferably 71-75°, more preferred 71-73°.

Below the corner radius cutting edge portion 108a, 108b the corner overhang angle β_{c} is equal to or larger than 70°, preferably equal to or larger than 71°, and the corner seating angle η_{c} is larger than β_{c}-7°, preferably larger than β_{c}-5°. More specifically, the corner overhang angle β_{c} varies over the corner, i.e. along the corner radius cutting edge portion 108a, 108b, from approximately 71° close to the adjacent surface wiping cutting edge portion 109a, 109b to approximately 89° close to the adjacent major cutting edge portion 107a, 107b. The corner seating angle η_{c} is larger than β_{c}-7°, preferably larger than β_{c}-5° at every given point around the corner, measured in a direction perpendicular to the bottom surface 105, i.e. straight up towards the cutting edge 106. That is, if the corner overhang angle β_{c} at one point around the corner is 71° the corner seating angle η_{c} at the same point, i.e. straight under said part of the corner overhang is larger than 64°, preferably larger than 66°.

These specific angles of the wiper overhang β_{w} and the corner overhang β_{c} are to optimize the clearance by an optimized axial inclination of the associated major cutting edge portion 107a, 107b. In short, so as to ensure the respective associated cutting edge portions 109a, 109b, 108a, 108b, are strong enough but at the same time provide as good axial inclination for the major cutting edge portions as possible.

Below and along the major cutting edge portion 107a, 107b, the secondary clearance surface 115a, 115b comprises a main surface section 115a1, 115b1 which forms a largest part of the surface area of this secondary clearance surface 115a, 115b and which is formed at a first major cutting edge seating angle ηₘ₁ with respect to the upper extension plane Pu. The first seating angle ηₘ₁ (see Fig. 3) is constant or substantially constant along the major cutting edge portion 107a, 107b, and approximately 84°. The overhang angle βₘ here varies along the major cutting edge portion 107a, 107b, from approximately 89° close to the corner cutting edge portion 108a, 108b to approximately 84° at the maximum cutting depth.

The secondary clearance surface 115a, 115b below the major cutting edge portion 107a, 107b further comprises a sub-surface section 115a2, 115b2 arranged between the main surface section 115a1, 115b1 and a transition between the secondary clearance surface 115a, 115b and the bottom surface 105, directly or indirectly by a transitional surface, such as a small chamfer around the bottom surface 105 for manufacturing purposes. In a side view, straight towards the secondary clearance surface 115a, 115b below the major cutting edge portion 107a, 107b (see Fig. 5) the sub-surface section 115a2, 115b2 has a triangular shape with one leg extending from a first end 125a of the transition opposite to a second end 125b thereof adjacent to the secondary clearance surface 116a below the corner radius cutting edge portion 108a, 108b, along the transition towards the second end 125b thereof over 45-55% of the total width of the transition, measured between the first 125a and second 125b ends thereof. In simple terms, the sub-surface section 115a2, 115b2 extends over 45-55% of the total width of the lower part of the secondary clearance surface 115a, 115b below the major cutting edge portion 107a, 107b.

Another leg of the sub-surface section 115a2, 115b2 extends from the first end 125a of the transition up towards a rear end 127a, defining the maximum cutting depth, of the major cutting edge portion 107a, 107b opposite to a front end 127b thereof adjacent to the corner radius cutting edge portion 108a, 108b, over 45-55% of the thickness tₜₒₜ of the milling insert 100. In simple terms, the sub-surface section 115a2, 115b2 extends over 45-55% of the total height of the milling insert 100, as seen in a side view. The sub-surface section 115a2, 115b2 is formed at a second major cutting edge seating angle ηₘ₂ with respect to the upper extension plane Pu, which second major cutting edge seating angle ηₘ₂ is smaller, preferably 5-15° smaller, more preferred 8-12° smaller than the first major cutting edge seating angle ηₘ₁. Here, the major cutting edge seating angle ηₘ₂ is approximately 75°.

The milling insert 100 in the shown embodiment further comprises two additional cutting edge portions 124a, 124b, each formed between one of the surface wiping cutting edge portions 109a, 109b and one of the ramping cutting edge portions 110a, 110b. Each additional cutting edge portion 124a, 124b is formed at an angle with respect to the adjacent surface wiping cutting edge portion, which angle may be approximately 2°-4°. Here, each primary clearance surface 113a, 113b below the surface wiping cutting edge portions 109a, 109b, is shown as a single surface extending also below the additional cutting edge portion 124a, 124b.

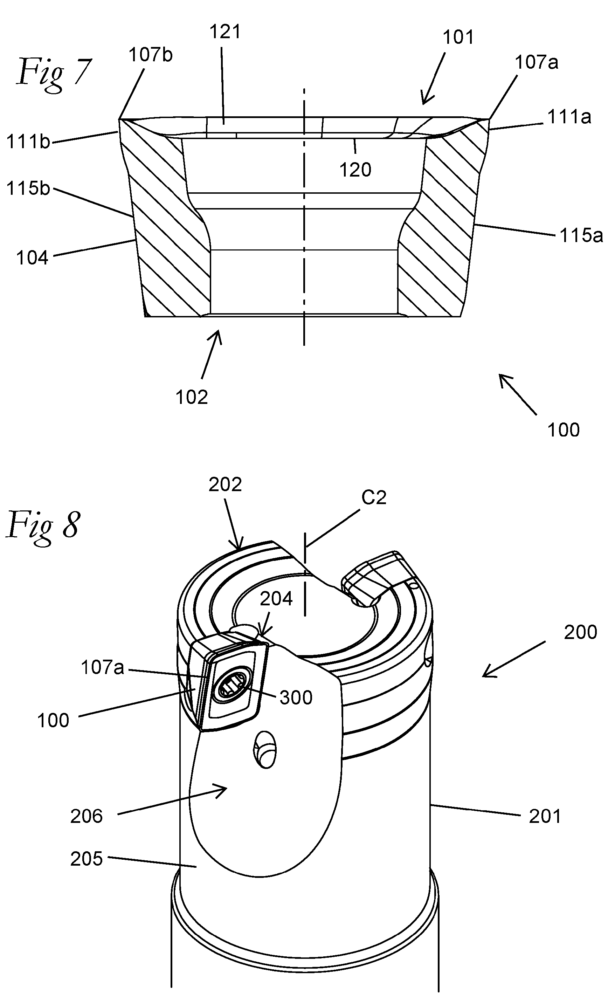

Reference is now made to Fig. 8, showing a milling tool 200 for shoulder milling according to the invention. The milling tool 200 comprises a tool body 201 with a cylindrical base shape. The tool body includes a front end 202 and a rear end (not shown), between which a central rotation axis C2 extends. Two insert seats 204 are formed in a transition between the front end 202 and a peripheral surface 205 extending between the front end 202 and the rear end. A chip pocket 206 is provided rotationally ahead of the at least one insert seat 204. In each insert seat 204, a milling insert 100 as described above is securely mounted by means of a fastening member 300 in the form of a screw, with the bottom surface 105 abutting the insert seat 204 and with the major cutting edge portion 107a being active.

The invention is of course not in any way restricted to the embodiments thereof described above, but many modifications thereof may be made without departing from the scope of the invention as defined in the appended claims. For example, the milling insert may be formed as a non-indexable milling insert with a single major cutting edge portion. The milling insert may be designed for left hand rotation of the tool as well as for right hand rotation of the tool.

## Claims

1. A milling insert (100) for mounting in a shoulder milling tool (200), the milling insert (100) having a positive basic shape and comprising:
- an upper side (101) comprising a rake surface (103),
- a lower side (102) opposite to the upper side (101) comprising a planar or essentially planar bottom surface (105),
- a side surface (104) extending between the upper side (101) and the lower side (102) around the periphery of the milling insert and comprising a first long side surface section (104L1) and a first short side surface section (104S1),
- a cutting edge (106) formed between the side surface (104) and the rake surface (103), the cutting edge (106) comprising at least a major cutting edge portion (107a, 107b) extending along the first long side surface section (104L1), a corner radius cutting edge portion (108a, 108b) extending over a transition between the first long side surface section (104L1) and the first short side surface section (104S1), a ramping cutting edge portion (110a, 110b) extending along the first short side surface section (104S1), and a surface wiping cutting edge portion (109a, 109b) positioned between the corner radius cutting edge portion (108a, 108b) and the ramping cutting edge portion (110a, 110b) and forming an angle with the ramping cutting edge portion (110a, 110b),
wherein the side surface (104) comprises:
- an upper set of primary clearance surfaces (111a, 111b, 112a, 112b, 113a, 113b, 114a, 114b), and
- a lower set of secondary clearance surfaces (115a, 115b, 116a, 116b, 117a, 117b, 118a, 118b) including a plurality of planar support surfaces (115a, 115b, 117a, 117b, 118a, 118b),
wherein the upper set of primary clearance surfaces (111a-114b) forms an overhang (119) protruding with respect to the secondary clearance surfaces (115a-118b) and extending over the surface wiping cutting edge portion (109a, 109b), wherein below the surface wiping cutting edge portion (109a, 109b), the secondary clearance surface (117a) is formed at a sharp wiper seating angle η_{w} with respect to an upper extension plane (Pu) parallel with the bottom surface (105), and the primary clearance surface (113a) is formed at a sharp wiper overhang angle β_{w} with respect to said upper extension plane (Pu),
wherein the wiper overhang angle β_{w} is equal to or larger than 70°,
***characterized* in that** the wiper seating angle η_{w} is equal to or larger than the wiper overhang angle β_{w}.

2. A milling insert (100) according to claim 1, ***characterized* in that** the wiper seating angle η_{w} is larger than the wiper overhang angle β_{w}.

3. A milling insert (100) according to claim 1 or 2, ***characterized* in that** the wiper overhang angle β_{w} is 71-75°, preferably 71-73°.

4. A milling insert (100) according to any of the claims 1-3, ***characterized* in that** the overhang (119) further extends over the corner radius cutting edge portion (108a, 108b), wherein below the corner radius cutting edge portion (108a, 108b), the secondary clearance surface (116a) is formed at a sharp corner seating angle η_{c} with respect to the upper extension plane (Pu), the primary clearance surface (112a) is formed at a sharp corner overhang angle β_{c} with respect to said upper extension plane (Pu), the corner overhang angle β_{c} is equal to or larger than 70°, and that the corner seating angle η_{c} is larger than β_{c}-7°, preferably larger than β_{c}-5°.

5. A milling insert (100) according to claim 4, ***characterized* in that** the corner overhang angle β_{c} is equal to or larger than 71°.

6. A milling insert (100) according to any of the preceding claims, ***characterized* in that** the overhang (119) extends around the entire upper periphery of the milling insert (100).

7. A milling insert (100) according to any of the preceding claims, ***characterized* in that** the secondary clearance surfaces (115a-118b) are formed at sharp seating angles β with respect to an upper extension plane (Pu) parallel with the bottom surface (105) around the entire periphery of the milling insert (100).

8. A milling insert according to any of the preceding claims, ***characterized* in that** the milling insert has a thickness tₜₒₜ measured between the bottom surface (105) and the cutting edge (106) in a direction perpendicular to the bottom surface (105), and that the lower set of secondary clearance surfaces (115a-118b) extends over at least 50% of the thickness tₜₒₜ, preferably over at least 60% of the thickness tₜₒₜ, more preferred over at least 70% of the thickness tₜₒₜ.

9. A milling insert (100) according to any of the preceding claims, ***characterized* in that** the secondary clearance surface (115a, 115b) below the major cutting edge portion (107a, 107b) comprises a main surface section (115a1, 115b1) which forms a largest part of the surface area of this secondary clearance surface (115a, 115b) and which is formed at a first major cutting edge seating angle ηₘ₁ with respect to the upper extension plane (Pu), which first seating angle ηₘ₁ is constant or substantially constant along the major cutting edge portion (107a, 107b).

10. A milling insert (100) according to claim 9, ***characterized* in that** the secondary clearance surface (115a, 115b) below the major cutting edge portion (107a, 107b) further comprises a sub-surface section (115a2, 115b2) arranged between the main surface section (115a1, 115b1) and a transition between the secondary clearance surface (115a, 115b) and the bottom surface (105), and extending along the transition from a first end (125a) of the transition opposite to a second end (125b) thereof adjacent to the secondary clearance surface (116a) below the corner radius cutting edge portion (108a, 108b), which sub-surface section (115a2, 115b2) is formed at a second major cutting edge seating angle ηₘ₂ with respect to the upper extension plane (Pu), wherein the second major cutting edge seating angle ηₘ₂ is smaller, preferably 5-15° smaller, more preferred 8-12° smaller than the first major cutting edge seating angle ηₘ₁.

11. A milling insert (100) according to claim 10, ***characterized* in that** in a side view, straight towards the secondary clearance surface (115a, 115b) below the major cutting edge portion (107a, 107b), the sub-surface section (115a2, 115b2) has a triangular shape with one leg extending from said first end (125a) of the transition along the transition towards the second end (125b) thereof over 45-55% of the total width of the transition, measured between the first (125a) and second (125b) ends thereof, and another leg extending from the first end (125a) of the transition up towards a rear end (127a) of the major cutting edge portion (107a, 107b) opposite to a front end (127b) thereof adjacent to the corner radius cutting edge portion (108a, 108b), over 45-55% of a thickness tₜₒₜ of the milling insert (100) measured between the bottom surface (105) and the cutting edge (106) in a direction perpendicular to the bottom surface (105).

12. A milling insert (100) according to any of the preceding claims, ***characterized* in that** the primary clearance surface (114a, 114b) below the ramping cutting edge portion (110a, 110b) is formed at a sharp overhang angle βᵣ with respect to an upper extension plane (Pu) parallel with the bottom surface (105), the secondary clearance surface (118a, 118b) below the ramping cutting edge portion (110a, 110b) is formed at a sharp seating angle ηᵣ with respect to said upper extension plane (Pu), wherein the ramping seating angle ηᵣ is larger, preferably 5-15° larger, even more preferred 8-12° larger, than the ramping overhang angle βᵣ.

13. A milling insert (100) according to any of the preceding claims, ***characterized* in that** the milling insert (100) is indexable with two index positions.

14. A milling insert (100) according to any of the preceding claims, ***characterized* in that**, in a top view straight towards the rake surface (103), the outer periphery of the milling insert (100) is formed by, in a clockwise direction and in the following order, a first major cutting edge portion (107a) extending along the first long side surface section (104L1), a first corner radius cutting edge portion (108a) extending over a transition between the first long side surface section (104L1) and the first short side surface section (104S1), a first surface wiping cutting edge portion (109a) extending along the first short side surface section (104S1) and forming an essentially right angle with the first major cutting edge portion (107a), a first transition portion extending along the first short side surface section (104S1), a first ramping cutting edge portion (110a) extending along the first short side surface section (104S1) and forming an angle of 10-30° with the first surface wiping cutting edge portion (109a), a first transition corner portion extending over a transition between the first short side surface section (104S1) and a second long side surface section (104L2), a second major cutting edge portion (107b) extending along the second long side surface section (104L2), a second corner radius cutting edge portion (108b) extending over a transition between the second long side surface section (104L2) and a second short side surface section (104S2), a second surface wiping cutting edge portion (109b) extending along the second short side surface section (104S2) and forming an essentially right angle with the second major cutting edge portion (107b), a second transition portion extending along the second short side surface section (104S2), a second ramping cutting edge portion (110b) extending along the second short side surface section (104S2) and forming an angle of 10-30° with the second surface wiping cutting edge portion (109b) and a second transition corner portion extending over a transition between the second short side surface section (104S2) and the first long side surface section (104L1).

15. A milling tool (200) comprising a tool body (201) and at least one milling insert (100) according to any of the claims 1-14, wherein each of the at least one milling inserts (100) is detachably mounted in an insert seat (204) of the tool body (201).
